Europäisches Patentamt

European Patent Office

Office européen des brevets

(11) Veröffentlichungsnummer: **0 450 636 A2**

# EUROPÄISCHE PATENTANMELDUNG

(21) Anmeldenummer: 91105376.7

(22) Anmeldetag: **05.04.91**

(51) Int. Cl.5: **B01D 25/21**

(30) Priorität: 06.04.90 IT 1996290

(43) Veröffentlichungstag der Anmeldung:
09.10.91 Patentblatt 91/41

(84) Benannte Vertragsstaaten:
CH DE ES FR GB IT LI NL

(71) Anmelder: **CARLE & MONTANARI S.p.A.**
**Via Neera 39**
**I-20141 Milano(IT)**

(72) Erfinder: **Carle, Enrico Massimo**
**Via Neera 39**
**I-20141 Milano(IT)**
Erfinder: **Carle, Marco Giovanni**
**Via Neera 39**
**I-20141 Milano(IT)**

(74) Vertreter: **Mayer, Hans Benno, Dipl.-Ing.**
**de Dominicis & Mayer Piazzale Marengo 6**
**I-20121 Milano(IT)**

(54) **Filterplatte für Kakaopresse.**

(57) Filterplatte fuer Kakaopresse, mit durchgehenden Bohrungen, die in eingaengige oder mehrgaengige, spiralfoermig angeordnete Nuten einmuenden.

FIG. 1

EP 0 450 636 A2

Die vorstehende Erfindung betrifft eine Filterplatte fuer Kakaopressen, entsprechend dem Oberbegriff des Anspruches 1.

Wie aus dem Stand der Technik bekannt ist, erfolgt waehrend der Endbehandlung der fluessigen Kakaopaste ein Trennvorgang der fluessigen Kakaobutter von den festen Bestandteilen. Dieser Vorgang erfolgt in einer Presse, die aus mehreren gegeneinander beweglichen Ringkolben besteht, die auf ihrer zur Presskammer gerichteten Seite eine Filterplatte aufweisen. Derartige Pressen und Filterplatten sind aus dem Stand der Technik bekannt.

Die bekannten Filterplatten nehmen auf der zur Presskammer hin gerichteten Seite ein feinmaschiges Filtertuch auf. Ferner weisen die Pressplatten eine Vielzahl von durchgehenden Bohrungen auf, die in Nuten muenden, die in Richtung des zugeordneten Presskolbens offen sind.

Die bekannten Filterplatten weisen mehrere konzentrisch angeordnete Nuten auf, die ueber eine Vielzahl radial angeordneter Nuten mit einem aussenliegenden Sammel- oder Abflusskanal in Verbindung stehen. Daraus folgt, dass auch die Durchgangsbohrungen der Filterplatten laengs konzentrischer Umfangslinien und entlang von Radialstrahlen angeordnet sind.

Der Sammel- und Abflusskanal steht mit einer Abflussbohrung fuer die Kakaobutter in Wirkverbindung, diese Abflussbohrung ist in den zugeordneten Presskolben eingearbeitet.

Beim Auspressen der Kakaopaste ist es wuenschenswert, eine groesstmoegliche Menge der wertvollen Kakaobutter auszupressen und diesen Pressvorgang gleichzeitig in kuerzestmoeglicher Zeit durchzufuehren.

Die bekannten Filterplatten weisen zwischen den konzentrisch angeordneten Nuten und den radial verlaufenden Nuten eine Vielzahl von geschlossenen Ringsektoren auf, d.h. es entstehen relativ grosse Plattenflaechen, die keine Durchgangsbohrungen aufweisen.

Die bekannten Filterplatten dieser Art weisen verschiedene Nachteile auf.

Konstruktiv ist die Vorsehung konzentrischer Nuten und radial zu diesen angeordneter Kanaele sowie die Vorsehung einer grossen Anzahl von Durchgangsbohrungen eine recht kontenaufwendige Loesung. Die verbleibende Kakaobutter wird beim Abpressen mit bekannten Filterplatten auf dem Kakaokuchen in unregelmaessiger Weise verteilt, was zu Schwierigkeiten bei der Erfassung der verbleibenden Kakaobutter entsprechend den vorgegebenen Normen, fuehrt. Es besteht ferner keine Moeglichkeit, den Pressvorgang zeitlich abzukuerzen. Am Ende des Pressvorganges fuehrt das Vorhandensein der beim Pressvorgang passiven Kreissektoren zur Bildung von Vertiefungen im Kuchen, und in diesen Vertiefungen lagert sich die wertvolle Kakaobutter ab und ist nur schlecht aus diesen Vertiefungen abzufoerdern. Desweiteren bilden sich bei Aufhebung des Pressdruckes in diesen kreissektorartigen Flaechen Saugkraefte, die dazu fuehren, dass aus den Durchgangsbohrungen der Filterplatte abgepresste Kakaobutter zurueckgesaugt wird, und vom ausgepressten Kakaokuchen absorbiert wird, was auf dem Kakaokuchen zu unregelmaessigen Kakaobutterablagerungen fuehrt. Diese unregelmaessige Zusammensetzung der Kakaokuchen fuehrt zu Verarbeitungsschwierigkeiten in der Zerkleinerungsmuehle.

Aufgabe der vorstehenden Erfindung ist es, eine Filterplatte vorzuschlagen, mit der ein gleichmaessiger Pressvorgang der Kakaomasse moeglich wird und ein schnelleres Abfoerdern der Kakaobutter ermoeglicht wird, dass ferner die Bildung von unerwuenschten Vertiefungen im Kakaokuchen und ein Ablagern von Kakaobutter in diesen Vertiefungen vermieden wird, und sichergestellt wird, dass der Kakaokuchen einen gleichmaessigen Kakaobuttergehalt aufweist, der gleichmaessig ueber den Kunchen verteilt ist, und die Filterplatte eine wesentlich geringere Anzahl von Abflussbohrungen gegenueber bekannten Filterplatten aufweist.

Die erfindungsgemaesse Aufgabe wird mit einer Filterplatte der genannten Art dadurch geloest, dass die durchgehenden Bohrungen in einen Kanal muenden, der spiralfoermig in der Abflussebene der Filterplatte angeordnet ist.

Man erreicht eine optimale Ausnutzung der Kreisflaeche der Filterplatte, indem der spiralfoermig angeordnete Kanal seinen Ursprung im Zentrum der Filterplatte hat und sich kontinuierlich, ohne Unterbrechung, bis zum Aussenumfang der Platte erstreckt und dort in einen Sammelkanal muendet. Eine hohe Gleichmaessigkeit des Pressvorganges wird erfindungsgemaess dadurch erzielt, dass die Durchgangsbohrungen entlang dem spiralfoermigen Kanal mit gleichem Abstand angeordnet sind.

Die fuer den Pressvorgang erforderliche Zeit kann weiter verkuerzt werden, wenn erfindungsgemaess der spiralfoermig angeordnete Kanal, in den die Durchgangsbohrungen muenden, als mehrgaengige Spirale ausgebildet ist.

Im Zentrum der Plattenflaeche kann ein schnelles und gleichmaessiges Ablaufen der abgepressten Kakaobutter dadurch erzielt werden, dass bei mehrgaengiger Ausbildung des spiralfoermig angeordneten Kanals ein Verbinden des Ursprungs der Spiralen ueber einen Ringkanal erfolgt. Es ist ferner moeglich, die Presszeiten weiterhin zu verkuerzen, wenn radial angeordnete Kanaele vorgesehen sind, die die spiralfoermig angeordneten Kanaele untereinander verbinden und in den aussenliegenden Sammelkanal muenden.

Erfindungsgemaess wird ein guenstiges Pressverhaeltnis dadurch erzielt, dass der Abstand zwischen den Durchgangsbohrungen der Steigung des spiralfoermig angeordneten Kanals entspricht.

Mit der erfindungsgemaessen Filterplatte koennen folgende Vorteile erzielt werden:
Durch Verkuerzen der Presszeit wird der Wirkungsgrad der Presse erhoeht. Die erfindungsgemaess vorgeschlagenen Pressplatten koennen auch in bereits vorhandenen Kakaopressen eingesetzt werden.

In dem aus der Presse ausgeworfenen Kakaokuchen entspricht der Kakaobutterinhalt genau dem gewuenschten, niedrigen Prozentsatz, was zu einer Zunahme der Ausbeute an wertvoller Kakaobutter fuehrt.

Aufgrund der gleichmaessigen, netzartigen Anordnung der Durchgangsbohrungen in der Pressplatte wird gewaehrleistet, dass der verbleibende Buttergehalt im Kakaokuchen gleichmaessig in diesem verteilt bleibt. Aufgrund ihres Aufbaues kann die neue Filterplatte auf einfache Weise hergestellt werden. Die erforderliche Anzahl an Durchgangsbohrungen ist wesentlich geringer als die Anzahl der in bekannten Filterplatten vorgesehenen Bohrungen. Aufgrund des Fehlens oder der Vorsehung geringer radial verlaufender Ablusskanaele koennen die erfindungsgemaessen Filterplatten einer starken Druckbelastung ausgesetzt werden.

Weitere Merkmale, Vorteile und Einzelheiten der erfindungsgemaessen Filterplatte koennen der folgenden Beschreibung, unter Bezugnahme auf die beigefuegten Zeichnungen, in denen ein bevorzugtes Ausfuehrungsbeispiel der Filterplatte dargestellt ist, entnommen werden.

Fig. 1 zeigt eine Ansicht der erfindungsgemaessen Filterplatte.

Fig. 2 zeigt einen Schnitt der Filterplatte entlang der Linie II-II in Fig. 1.

Fig. 3 zeigt in vergroesserter Darstellung das Detail A nach Fig. 2; und

Fig. 4 zeigt schematisch einen Schnitt durch eine bekannte Kakaopresse.

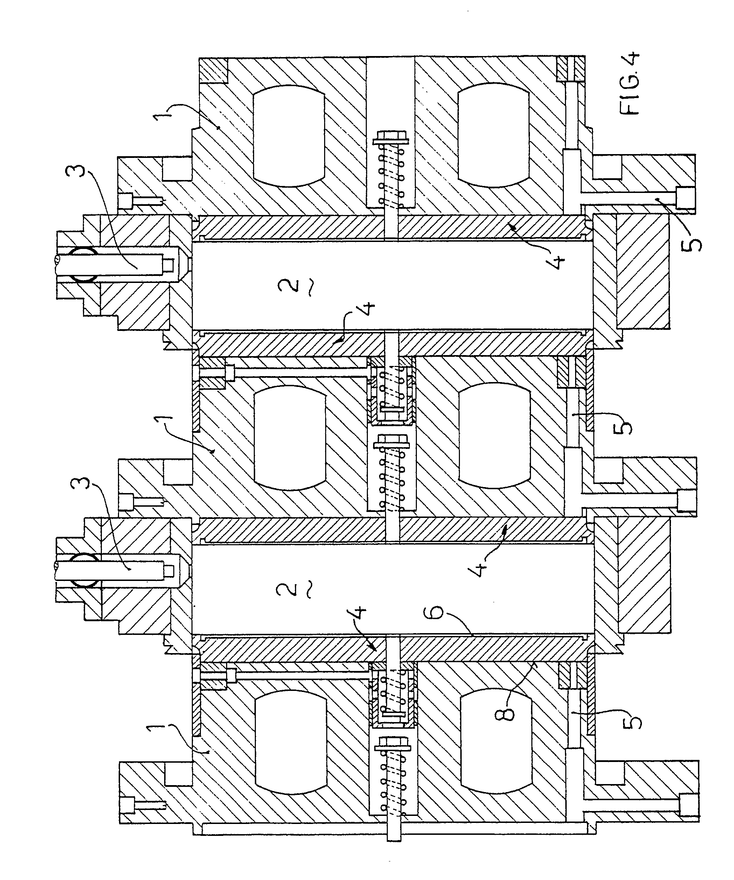

Im folgenden soll kurz die in Fig. 4 dargestellte, bekannte Kakaopresse beschrieben werden. In der Presse sind mit 1 drei Filterkolben dargestellt. In der dargestellten Oeffnungslage der seitlichen Kolben 1, werden Presskammern 2 gebildet, in die im Punkt 3 die zu behandelnde Kakaopaste eingefuellt wird. Mit 4 sind die Filterplatten gekennzeichnet, die auf der zur Presskammer 2 gerichteten Seite ein Filtertuch und auf der zum Kolben 1 gerichteten Abflusseite konzentrisch angeordnete Abflusskanaele, in Kombination mit radial angeordneten Abflusskanaelen aufweisen. In die Kanaele muenden Durchgangsbohrungen ein. Die radial angeordneten Kanaele sind mit einem Sammelkanal verbunden, der auf der Aussenseite der Filterplatte vorgesehen ist und mit dem Abflusskanal 5 zum Abfoerdern der abgepressten Kakaobutter in Wirkverbindung steht.

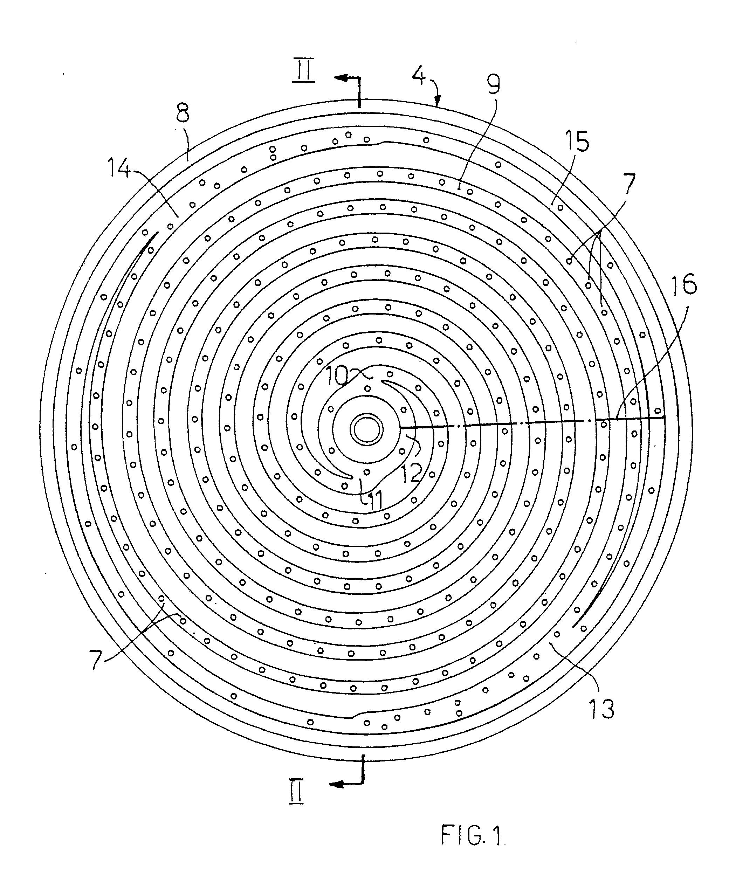

Es sei nun auf die Figuren 1 - 3 Bezug genommen, die die erfindungsgemaesse Filterplatte 4 darstellen.

Auf der Filterseite der Platte ist in bekannter Weise eine kreisfoermige Vertiefung 6 vorgesehen, die zur Aufnahme eines nicht dargestellten Filtertuches dient.

Erfindungsgemaess sind die durchgehenden Bohrungen 7 entlang einer spiralfoermig angeordneten Bahn vorgesehen. Die durchgehenden Bohrungen 7 muenden in der Ebene 8 der Platten 4, die dem zugeordneten Kolben zugeordnet ist, in einen spiralfoermig angeordneten Kanal 9.

Im dargestellten Beispiel hat der spiralfoermig angeordnete Kanal im Zentrum der Filterplatte seinen Ursprung und endet am aeusseren Umfang der Filterplatte, in Uebereinstimmung mit einer Abflussoeffnung 5 im Presskolben 1.

Im dargestellten Beispiel ist eine mehrgaengige Spirale 9 gezeigt, deren Ursprung 10, 12 mit einem Ringkanal 12 in Wirkverbindung steht und dessen Endteile 13, 14 tangential in einen Sammel- und Abflusskanal 15 muenden.

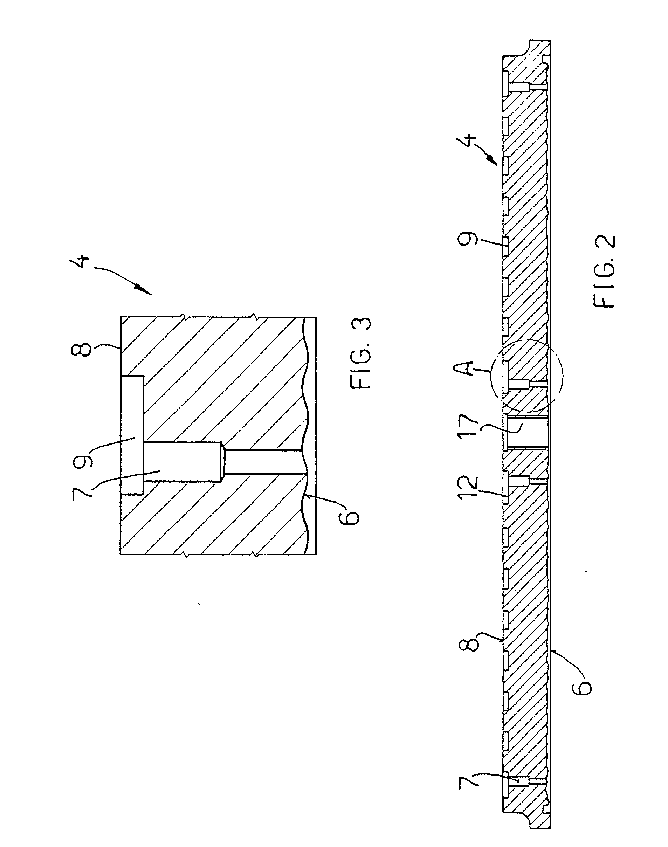

Wie den Figuren 2 und 3 zu entnehmen ist, weisen die Durchgangsbohrungen 7 in bekannter Weise auf der Seite des Filtertuches kleinen Durchmesser und auf der Plattenseite, in die die spiralfoermig angeordneten Kanaele 9 eingearbeitet sind, groesseren Durchmesser auf.

Wie der Zeichnung entnommen werden kann, erstreckt sich die Spiralnut mit konstanter Steigung von ihrem Ursprung zum aeusseren Umfang der Filterplatter. Entsprechend einem vorteilhaften Ausfuehrungsbeispiel sind die Durchgangsbohrungen 7 entlang dem spiralfoermigen Kanal mit gleichem Abstand angeordnet. Aus Gruenden der Einfachheit ist in der Zeichnung die Verteilung der Durchgangsbohrungen 7 zeichnerisch nicht mit gleichmaessigem Abstand dargestellt. Auch das vorteilhafte Merkmal, den Abstand der Durchgangsbohrungen entsprechend der Steigung des spiralfoermigen Kanales 9 vorzusehen und die Durchgangsbohrungen 7 nach Art eines Netzwerkes mit rechteckigen Maschen anzuordnen, ist zeichnerich nicht exakt dargestellt.

Durch Vorsehen einer mehrgaengigen Spirale wird die Laenge des einzelnen, spiralfoermig angeordneten Kanals vermindert.

Durch rasterartige Anordnung der Durchgangsbohrungen 7 auf der Presseite der Platte wird ein gleichmaessiges Abpressen der Kakaobutter erzielt, und im Kakaokuchen wird die Bildung ueblicher Vertiefungen mit Anhaeufungen von Kakobutter vermieden. Dieser Nachteil wird besonders bei Hochleistungspressen behoben.

Durch zusaetzliches Anordnen einer beschraenkten Anzahl von radial verlaufenden Abflusskanaelen, welche die spiralfoermig angeordneten Kanaele in Radialrichtung schneiden und verbinden, um in den aussenliegenden Abflusskanal 15 zu muenden, wird es moeglich, die Presszeit weiterhin zu vermindern. Ein derartig radial angeordneter Abflusskanal ist schematisch mit dem Bezugszeichen 16 angedeutet.

Mit dem Bezugszeichen 17 wird die mittlere Bohrung der Filterplatte bezeichnet, die der Aufnahme der an sich bekannten und nicht naeher dargestellten Befestigunsmittel fuer die Filterplatte dient.

Die Arbeitsweise der Filterplatte ist der Beschreibung derselben sowie der Kakaopresse zu entnehmen.

Die gleichmaessige, rasterartige Anordnung der Durchgangsbohrungen 7 auf der Oberflaeche der Platte 4 erlaubt es, ein gleichmaesiges Abpressen zu erzielen, der Pressvorrgang zum Abpressen der Kakaobutter erfolgt nicht nur gleichmaessiger sondern auch schneller, was zu einer Verkuerzung der Presszeiten fuehrt. Die Abmessungen der Durchgangsbohrungen und der spiralfoermig angeordneten Abflusskanaele sowie der zusaetzlichen, radial verlaufenden Kanaele, der Querschnitt der Abflusskanaele, der gegenseitige Abstand der Durchgangsbohrungen, sowie die Steigung der spiralfoermig angeordneten Abflusskanaele koennen beliebig gewaehlt werden, entsprechend dem Aufbau der Presse und den Merkmalen der abzupressenden Kakaopaste. Durch genàues Einstellen des Pressdruckes kann der gewuenschte Restbuttergehalt im Kakaokuchen genau festgelegt werden.

Obwohl aus Gruenden der Einfachheit in der vorstehenden Beschreibung stets auf Kakaopaste Bezug genommen wurde, deckt die Erfindung auch die Filterplatten zum Abpressen andersartiger Samen, aus denen Oel oder Fett abzupressen ist.

**Patentansprüche**

1. Filterplatte fuer Kakaopresse, mit einer Ausnehmung zur Aufnahme von einem oder mehreren Filtertuechern und einer Vielzahl von Durchgangsbohrungen, die auf der Abflusseite in Kanaele zum Abfoerdern der abgepresseten Kakaobutter muenden, **dadurchgekennzeichnet,** dass die Durchgangsbohrungen (7) in eine spiralfoermig verlaufende Kanalnut (9) muenden, die in der Abflussebene (8) der Filterplatte (4) angeordnet ist.

2. Filterplatte, nach Patentanspruch 1, **dadurch gekennzeichnet**, dass der spiralfoermig angeordnete Kanal seinen Ursprung im Zentrum der Filterplatte (4) hat, und am Aussenumfanges der Platte (4) in einen Sammel- und Ablusskanal (15) muendet.

3. Filterplatte, nach Patentanspruch 1, **dadurch gekennzeichnet**, dass die Durchgangsbohrungen (7) entlang dem spiralfoermigen Kanal (9) mit gleichem Abstand angeordnet sind.

4. Filterplatte, nach Patentanspruch 1, **dadurch gekennzeichnet**, dass der spiralfoermig angeordnete Kanal (9) als mehrgaengige Spirale ausgebildet ist.

5. Filterplatte, nach Patentanspruch 1, **dadurch gekennzeichnet**, dass die spiralfoermig angeordneten Kanaele (9) im Ursprung (10, 11) der Spirale (9) ueber einen Ringkanal (12) miteinander verbunden sind.

6. Filterplatte, nach Patentanpruch 1, **dadurch gekennzeichnet**, dass radial verlaufende Kanaele (16) vorgesehen sind, die die spiralfoermig angeordneten Kanaele (9) schneiden und in den aeusseren Sammel- und Abflusskanal (15) ausmuenden.

7. Filterplatte, nach Patentanspruch 1, **dadurch gekennzeichnet**, dass der Abstand zwischen den Durchgangsbohrungen (7) dem Wert der Steigung der Spirale (9) entspricht.

FIG.1.

FIG. 3

FIG. 2

EP 0 450 636 A2

FIG. 4

EP 0 450 636 A2